# EUROPEAN PATENT APPLICATION

(11) **EP 4 763 805 A1**
(43) Date of publication of application: **24.06.2026**
(21) Application number: 25223631.0
(22) Date of filing: 16.12.2025
(51) Int. Cl.: C01G 1/00, H01M 10/052, H01M 10/0525, H01M 4/62, H01M 4/58, H01M 4/136

(54) **POSITIVE ELECTRODE SLURRY FOR RECHARGEABLE LITHIUM BATTERY, POSITIVE ELECTRODE, AND RECHARGEABLE LITHIUM BATTERY INCLUDING THE SAME**

(30) Priority: 19.12.2024 KR 20240191877
(71) Applicant: SAMSUNG SDI CO., LTD., Yongin-si, Gyeonggi-do 17084 (KR)
(72) Inventor: BAE, Sangjin, Gyeonggi-do 17084 (KR); YUN, Taeho, Gyeonggi-do 17084 (KR); LEE, Eunhee, Gyeonggi-do 17084 (KR); KIM, Dohee, Gyeonggi-do 17084 (KR); SEO, Hyomin, Gyeonggi-do 17084 (KR); LEE, Sangwoo, Gyeonggi-do 17084 (KR)
(74) Representative: Michalski Hüttermann & Partner mbB

(57) **Abstract**

Provided are a positive electrode slurry for a rechargeable lithium battery, a positive electrode including the positive electrode slurry, and a rechargeable lithium battery. The positive electrode slurry for a rechargeable lithium battery including a positive electrode active material including lithium iron phosphatebased compound particles, an organic phosphoric acid dispersant, and a solvent.

## Description

### BACKGROUND

### 1. Field

A positive electrode slurry for a rechargeable lithium battery, a positive electrode including the positive electrode slurry, and a rechargeable lithium battery including the positive electrode are disclosed.

### 2. Description of the Related Art

A rechargeable lithium battery may be recharged and has three or more times as high an energy density per unit weight as a conventional lead storage battery, nickel-cadmium battery, nickel hydrogen battery, nickel zinc battery and the like. A rechargeable lithium battery may be also charged at a high rate and thus, is commercially manufactured for a laptop, a cell phone, an electric tool, an electric bike, and the like. Providing additional energy density may be advantageous.

Such a rechargeable lithium battery is manufactured by injecting an electrolyte solution into an electrode assembly, which includes a positive electrode including a positive electrode active material capable of intercalating/deintercalating lithium ions and a negative electrode including a negative electrode active material capable of intercalating/deintercalating lithium ions.

In the case of positive electrode active materials, demand is increasing for LiFePO₄ (lithium iron phosphate), which has desired or improved thermal stability and contains low cost Fe. However, lithium iron phosphate active materials have lower conductivity and lithium ion diffusion rate than other active materials due to limitations in their crystal structure ( for example, olivine).

One way to address the above in the industry is to use an appropriate or desired conductive material together with the application of lithium iron phosphate active material particulates. However, due to the presence of fine particles with high surface energy, coagulation of solids within the positive electrode slurry may be aggravated.

When the solid component has a severe coagulation phenomenon, high viscosity is formed even at a low solid content of about 60 wt%, and issues such as slurry loading deviation (center-edge L/L difference) occur in the subsequent coating process, making renders applying the process challenging.

Furthermore, due to the high viscosity, the flowability of the positive electrode slurry is reduced, making uniform application difficult. To address the above, when the amount of solvent inside the positive electrode slurry is increased, the positive electrode quality may deteriorate during the drying process, and additional drying equipment may have to be operated to volatilize the high amount of solvent, or the length of the drying furnace may increase, which may cause reduced processability.

### SUMMARY

Some example embodiments increase a solid content of the positive electrode slurry while forming an appropriate or desired viscosity for the coating.

Some example embodiments include a positive electrode slurry for a rechargeable lithium battery, the positive electrode slurry including a positive electrode active material including lithium iron phosphate-based compound particles, an organic phosphoric acid dispersant, and a solvent.

Some example embodiments include a positive electrode manufactured from a positive electrode slurry according to the aforementioned example embodiments.

A rechargeable lithium battery including a positive electrode according to the aforementioned example embodiments is provided.

A positive electrode slurry for a rechargeable lithium battery according to some example embodiments may have an appropriate or desired viscosity for coating while increasing the solid content.

Accordingly, by using the positive electrode slurry according to some example embodiments, the processability during positive electrode manufacturing is improved, and a positive electrode with improved physical properties may be obtained.

### BRIEF DESCRIPTION OF THE DRAWINGS

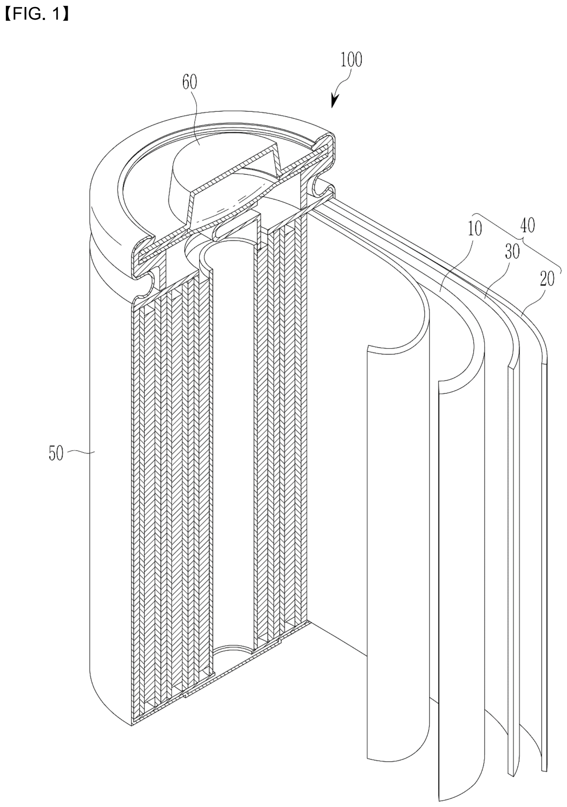

FIGS. 1 to 4 are schematic views illustrating rechargeable lithium batteries according to some example embodiments.

### DETAILED DESCRIPTION

Hereinafter, example embodiments of the present disclosure are described in detail. However, these embodiments are examples, the present disclosure is not limited thereto and the present disclosure is defined by the scope of claims.

As used herein, when specific definition is not otherwise provided, It is understood that when an element such as a layer, film, region, or substrate is referred to as being "on" another element, the element can be directly on the other element, or intervening elements may also be present therebetween.

As used herein, when specific definition is not otherwise provided, the singular may also include the plural. In addition, unless otherwise specified, "A or B" may mean "including A, including B, or including A and B."

As used herein, "combination thereof" may indicate a mixture, a stack, a composite, a copolymer, an alloy, a blend, or a reaction product of constituents.

As used herein, when a specific definition is not otherwise provided, "substituted" refers to replacement of at least one hydrogen of a compound by a halogen atom (F, CI, Br, or I), a hydroxy group, a C1 to C20 alkoxy group, a nitro group, a cyano group, an amine group, an imino group, an azido group, an amidino group, a hydrazino group, a hydrazono group, a carbonyl group, a carbamyl group, a thiol group, an ester group, an ether group, a carboxyl group or a salt thereof, a sulfonic acid group or a salt thereof, a phosphoric acid or a salt thereof, a C1 to C20 alkyl group, a C2 to C20 alkenyl group, a C2 to C20 alkynyl group, a C6 to C30 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, or a combination thereof.

As used herein, when a specific definition is not otherwise provided, "heterocycloalkyl group", "heterocycloalkenyl group", "heterocycloalkynyl group," and "heterocycloalkylene group" refer to presence of at least one N, O, S, or P in a cyclic compound of cycloalkyl, cycloalkenyl, cycloalkynyl, and cycloalkylene.

In the chemical formula of the present specification, unless a specific definition is otherwise provided, hydrogen is bonded at the position when a chemical bond is not drawn where hydrogen is supposed to be given.

As used herein, when a definition is not otherwise provided, a particle diameter may be an average particle diameter. In addition, the particle diameter may refer to an average particle diameter (D50), which means the diameter of particles having a cumulative volume of 50 volume% in the particle size distribution. The average particle diameter (D50) may be measured by a method known to those skilled in the art, for example, by a particle size analyzer, or by a transmission electron microscope image, or a scanning electron microscope image. Alternatively, a dynamic light-scattering measurement device may perform a data analysis, and the number of particles is counted for each particle size range. From this, the average particle diameter (D50) value may be readily obtained through a calculation. Alternatively, it can be measured using a laser diffraction method. When measuring by the laser diffraction method, for example, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter (D50) on the basis of 50% of the particle diameter distribution in the measuring device.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Positive electrode slurry for a rechargeable lithium battery:

Some example embodiments include a positive electrode slurry for a rechargeable lithium battery, including a positive electrode active material including lithium iron phosphate-based compound particles, an organic phosphoric acid dispersant, and a solvent.

As discussed above, when manufacturing a positive electrode slurry using a positive electrode active material including lithium iron phosphate-based compound particles, there is a limit to reducing or suppressing the coagulation phenomenon of the solids. For example, as the solid content of the positive electrode slurry increases, coagulation of the solid inevitably occurs, which may increase the viscosity of the positive electrode slurry.

In some example embodiments, to address the above issue, the aforementioned organic phosphoric acid dispersant is used.

For example, when the organic phosphoric acid dispersant is used, the viscosity may be reduced by reducing the coagulation of the positive electrode slurry, thereby improving the flowability of the slurry, compared to when the organic phosphoric acid dispersant is not used.

This makes it possible to form an appropriate or desired viscosity for the coating while increasing the solid content of the positive electrode slurry. As a result, the processability during the manufacture of the positive electrode may be improved, and a positive electrode with improved properties may be obtained.

Hereinafter, the positive electrode slurry for a rechargeable lithium battery according to the aforementioned example embodiment is described in detail.

### Organic Phosphoric Acid Dispersant

The organic phosphoric acid dispersant is structurally similar to a lithium iron phosphate-based compound and thus has high affinity, and the desired surface adsorption and desired dispersion effects of the organic phosphoric acid dispersant and the positive electrode active material may be exhibited.

Accordingly, by securing a relatively high solid content, low shear viscosity, and the like, of the positive electrode slurry in the same composition excluding the aforementioned organic phosphoric acid dispersant, it is possible to change the loading design, drying speed, and the like, of the positive electrode.

For reference, the aforementioned example organic phosphoric acid dispersant is in the form of a single molecule, not a polymer, and when the organic phosphoric acid dispersant is in the form of a polymer, the organic phosphoric acid dispersant would not be able to exhibit the aforementioned adsorption and dispersion effects.

The aforementioned example organic phosphoric acid dispersant may be or include a phosphoric acid ester dispersant represented by Chemical Formula 1:

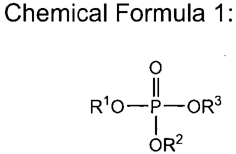

In Chemical Formula 1 above, R¹ to R³ each independently include a hydrogen atom or a substituted or unsubstituted alkyl group having 1 to 30 carbon atoms; provided that, at least one of R¹ to R³ may include an alkyl group having a terminal end substituted with a (meth)acrylate group.

All of the R¹ to R³ may be represented by Chemical Formula 2 below:

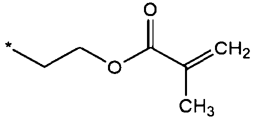

For example, Chemical Formula 1 maybe represented by Chemical Formula 1-1:

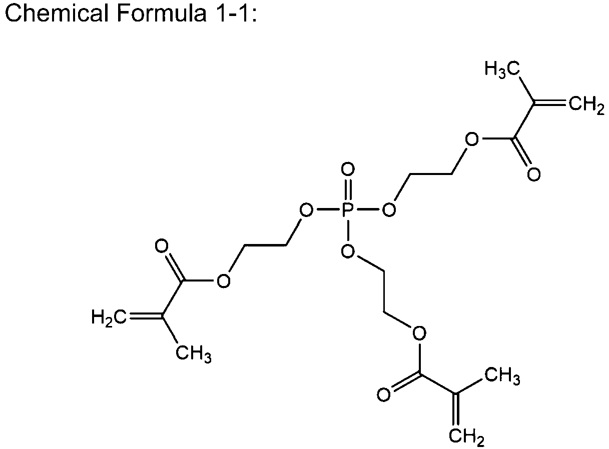

The aforementioned example organic phosphoric acid dispersant may be included in an amount in a range of ≥ 0.01 parts by weight to ≤ 10 parts by weight, ≥ 0.05 parts by weight to ≤ 5 parts by weight, ≥ 0.1 parts by weight to ≤ 3 parts by weight, or ≥ 0.5 parts by weight to ≤ 2 parts by weight based on 100 parts by weight of the lithium iron phosphate-based compound particles. In the above range, the desired surface adsorption and dispersion effects of the aforementioned example positive electrode active material may be exhibited.

### Positive Electrode Active Material

The positive electrode active material includes lithium iron phosphate-based compound particles.

The lithium iron phosphate-based compound particles may be represented by Chemical Formula 1:

Chemical Formula 1: LiₐFeₓM_{y}PO_{4-b}X_{b}

In Chemical Formula 1,
0.9≤a≤1.8, 0.6≤x≤1, 0≤y≤0.4, and 0≤b≤0.1,
M is or includes one or more elements including Al, B, Ba, Ca, Ce, Co, Cr, Cu, Mg, Mn, Mo, Ni, Se, Si, Sn, Sr, Ti, V, W, Y, Zn, and Zr, and
X is or includes one or more elements including F, P, and S.

For example, the lithium iron phosphate-based compound particles may be represented by LiFePO₄.

In some example embodiments, the lithium iron phosphate-based compound particles may include at least two types of lithium iron phosphate-based compound particles having different particle diameters.

For example, a lithium iron phosphate-based compound in a so-called bimodal form, in which first lithium iron phosphate-based compound particles having a relatively small particle diameter (hereinafter, sometimes referred to as "small particles") and second lithium iron phosphate-based compound particles having a relatively large particle diameter (hereinafter, sometimes referred to as "large particles") are mixed, may be used as a positive electrode active material.

Conductivity and lithium ion diffusion rate may be improved through the lithium iron phosphate-based compound small particles, and the coagulation phenomenon of the solid component may be reduced or suppressed through the above lithium iron phosphate-based compound large particles.

The first lithium iron phosphate-based compound particles may have a D10 particle diameter in a range of ≥ 0.4 µm to ≤ 0.5 µm; a D50 particle diameter in a range of ≥ 0.8 µm to ≤ 1.4 µm; and a D90 particle diameter in a range of ≥ 1.5 µm to ≤ 3 µm.

The second lithium iron phosphate-based compound particles may have a D10 particle diameter in a range of ≥ 1.0 µm to ≤ 2.0 µm; a D50 particle diameter in a range of ≥ 5.0 µm to ≤ 10 µm; and a D90 particle diameter in a range of ≥ 15 µm to ≤ 25 µm.

The first lithium iron phosphate-based compound particles and the second lithium iron phosphate-based compound particles may be mixed in a weight ratio in a range of about 1:99 to about 99:1, about 10:90 to about 90:10, about 20:80 to about 80:20, about 30:70 to about 70:30, or about 40:60 to about 60:40.

The lithium iron phosphate-based compound particles, regardless of one or two types from amongst the first particles and the second particles, may be included in an amount in a range of ≥ 85 parts by weight to ≤ 99 parts by weight, or ≥ 90 parts by weight to ≤ 98 parts by weight, based on 100 parts by weight of the total solid content of the positive electrode slurry.

In addition, the lithium iron phosphate-based compound particles, regardless of one or two types from amongst the first particles and the second particles, may be included in an amount in a range of ≥ 50 wt% to ≤ 70 wt%, ≥ 55 wt% to ≤ 68 wt%, or ≥ 60 wt% to ≤ 65 wt%, based on 100 wt% of the total amount of the positive electrode slurry.

When the above ranges are satisfied, an appropriate or desired capacity may be exhibited.

### Binder and Conductive Material

The positive electrode slurry may further include a binder and/or a conductive material.

The binder adheres the positive electrode active material particles to each other, and adheres the positive electrode active material to the current collector. Examples of binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is included to provide electrode conductivity, and any electrically conductive material may be used as a conductive material, unless the electrically conductive material causes an adverse chemical change in the battery. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

Based on 100 parts by weight of the total solid content of the positive electrode slurry, the conductive material may be included in an amount in a range of ≥ 0.5 parts by weight to ≤ 5 parts by weight; and the binder may be included in an amount in a range of ≥ 0.5 parts by weight to ≤ 10 parts by weight.

### Solvent

The solvent may include NMP (N-Methyl-2-Pyrrolidone). The solvent may be included in an amount of in a range of ≥ 30 wt% to ≤ 50 wt%, ≥ 30 wt% to ≤ 45 wt%, or ≥ 30 wt% to ≤ 40 wt%, based on 100 wt% of the total amount of the positive electrode slurry.

In other words, the solid content excluding the solvent may be included in an amount in a range of ≥ 50 wt% to ≤ 70 wt%, ≥ 55 wt% to ≤ 70 wt%, or ≥ 60 wt% to ≤ 70 wt% based on 100 wt% of the total amount of the positive electrode slurry.

### Properties of Positive Electrode Slurry

A particle size (FOG, Fineness of Grind Gauge) of the positive electrode slurry may be in a range of ≥ 5 µm to ≤ 25 µm.

The viscosity of the positive electrode slurry at a shear rate of 10 s⁻¹ at 25 °C may be in a range of ≥ 1,000 cP to ≤ 11,000 cP.

TI (10/100) of the positive electrode slurry may be in a range of ≥ 1.5 to ≤ 3.

### Positive Electrode for Rechargeable Lithium Battery:

Some example embodiments include a positive electrode for a rechargeable lithium battery, the positive electrode including a positive electrode current collector, and a positive electrode active material layer on the positive electrode current collector. The positive electrode active material layer includes a positive electrode active material including lithium iron phosphate-based compound particles, and an organic phosphoric acid solid component.

The positive electrode may be manufactured by coating the positive electrode slurry of the above-described example embodiment onto the positive electrode current collector, and drying the positive electrode slurry, and the solvent may be removed during the drying process. Additionally, the organic phosphoric acid solid component may be or include a dried solid component of the organic phosphoric acid dispersant of the aforementioned example embodiment.

Accordingly, except for the solvent, the description of the positive electrode slurry of the above-described example embodiment may be equally applied, or substantially equally applied, to the positive electrode.

Hereinafter, the polarities of the aforementioned embodiments are described in detail, excluding any description overlapping with the above-described embodiments.

### Positive Electrode Active Material

As the positive electrode active material, a positive electrode active material including the lithium iron phosphate-based compound particles is used. The explanation for this is as described above.

As the positive electrode active material, a compound (lithiated intercalation compound) capable of intercalating and deintercalating lithium may be further used. For example, one or more types of composite oxides of lithium and a metal such as or including at least one of cobalt, manganese, nickel, and combinations thereof may be used.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free lithium nickel-manganese-based oxide, or a combination thereof.

As an example, a compound represented by any of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GeO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or include, for example, at least one of a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

Chemical Formula 11: Liₐ₁Niₓ₁M¹_{y1}M²_{z1}O_{2-b1}X_{b1}

In Chemical Formula 11, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² each independently is or includes one or more of Al, B, Ba, Ca, Ce, Co, Cr, Cu, Fe, Mg, Mn, Mo, Nb, Si, Sn, Sr, Ti, V, W, and Zr, and X is or includes one or more of F, P, and S.

In other examples, in Chemical Formula 11, 0.6≤x1≤1, 0≤y1≤0.4, and 0≤z1≤0.4, or 0.8≤x1≤1, 0≤y1≤0.2, and 0≤z1≤0.2.

Chemical Formula 12: Liₐ₂Coₓ₂M³_{y2}O_{2-b2}X_{b2}.

In Chemical Formula 12, 0.9≤a2≤1.8, 0.7≤x2≤1, 0≤y2≤0.3, 0.9≤x2+y2≤1.1, and 0≤b2≤0.1, M³ is or includes one or more of Al, B, Ba, Ca, Ce, Cr, Cu, Fe, Mg, Mn, Mo, Ni, Se, Si, Sn, Sr, Ti, V, W, Y, Zn, and Zr, and X is or includes one or more of F, P, and S.

Chemical Formula 13: Liₐ₃Feₓ₃M⁴_{y3}PO_{4-b3}X_{b3}.

In Chemical Formula 13, 0.9≤a3≤1.8, 0.6≤x3≤1, 0≤y3≤0.4, and 0≤b3≤0.1, M⁴ is or includes one or more of Al, B, Ba, Ca, Ce, Co, Cr, Cu, Mg, Mn, Mo, Ni, Se, Si, Sn, Sr, Ti, V, W, Y, Zn, and Zr, and X is or includes one or more of F, P, and S.

Chemical Formula 14: Liₐ₄Niₓ₄Mn_{y4}M⁵_{z4}O_{2-b4}X_{b4}.

In Chemical Formula 14, 0.9≤a4≤1.8, 0.8≤x4<1, 0<y4≤0.2, 0≤z4≤0.2, 0.9≤x4+y4+z4≤1.1, and 0≤b4≤0.1, M⁵ is or includes one or more of Al, B, Ba, Ca, Ce, Cr, Fe, Mg, Mo, Nb, Si, Sn, Sr, Ti, V, W, and Zr, and X is or includes one or more of F, P, and S.

For example, the positive electrode active material may be or include a high-nickel positive electrode active material in which the nickel content is greater than or equal to about 80 mol%, greater than or equal to about 85 mol%, greater than or equal to about 90 mol%, greater than or equal to about 91 %, or greater than or equal to about 94 mol% and less than or equal to about 99 mol%, based on 100 mol% of metal excluding lithium in the lithium transition metal composite oxide. The high-nickel positive electrode active material may achieve high capacity and may be applicable to high-capacity, high-density rechargeable lithium batteries.

### Positive Electrode

The positive electrode active material layer may include a positive electrode active material and may further include a binder and/or a conductive material.

For example, the positive electrode may further include an additive that may constitute a sacrificial positive electrode.

### Rechargeable Lithium Battery:

Some example embodiments include a rechargeable lithium battery including the positive electrode of the above example embodiments, a negative electrode, a separator between the positive electrode and the negative electrode, and an electrolyte solution.

Because the above rechargeable lithium battery includes the positive electrode of the aforementioned example embodiments, the performance thereof may be improved overall.

Hereinafter, a rechargeable lithium battery according to the aforementioned example embodiments is described in detail, excluding any description overlapping with the aforementioned example embodiments.

### Negative Electrode Active Material

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOₓ (0 < x ≤ 2), a Si-Q alloy (wherein Q is or includes an element such as or including at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, SnO₂, a Sn-based alloy, or a combination thereof.

The silicon-carbon composite may be or include a composite of silicon and amorphous carbon. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

### Negative Electrode

A negative electrode for a rechargeable lithium battery includes a current collector, and a negative electrode active material layer on the current collector. The negative electrode active material layer includes a negative electrode active material, and may further include a binder and/or a conductive material.

For example, the negative electrode active material layer may include ≥ 90 wt% to ≤ 99 wt% of the negative electrode active material, ≥ 0.5 wt% to ≤ 5 wt% of the binder, and ≥ 0.5 wt% to ≤ 5 wt% of the conductive material.

The binder adheres the negative electrode active material particles to each other, and adheres the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, a (meth)acrylic rubber, a butyl rubber, a fluororubber, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting viscosity may be further included. As the cellulose-based compound, at least one or more of carboxymethyl cellulose, hydroxypropylmethyl cellulose, methyl cellulose, or alkali metal salts thereof may be mixed and used. The alkali metal may be or include at least one of Na, K, or Li.

The dry binder is a polymer material capable of being fiberized, and may be or include, for example, at least one of polytetrafluoroethylene, polyvinylidene fluoride, polyvinylidene fluoride-hexafluoropropylene copolymer, polyethylene oxide, or a combination thereof.

The conductive material is included to provide electrode conductivity, and any electrically conductive material may be used as a conductive material, unless the electrically conductive material causes a chemical change. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The negative electrode current collector may include at least one of a copper foil, a nickel foil, a stainless-steel foil, a titanium foil, a nickel foam, a copper foam, a polymer substrate coated with a conductive metal, and a combination thereof.

### Electrolyte Solution

An electrolyte solution for a rechargeable lithium battery includes a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone, or in a mixture of two or more types of solvents.

In addition, when using a carbonate-based solvent, a cyclic carbonate and a chain carbonate may be mixed, and the cyclic carbonate and the chain carbonate may be mixed in a volume ratio in a range of about 1:1 to about 1:9.

The electrolyte may further include at least one of vinylethyl carbonate, vinylene carbonate, fluoroethylene carbonate, difluoro ethylenecarbonate, chloroethylene carbonate, dichloroethylene carbonate, bromoethylene carbonate, dibromoethylene carbonate, nitroethylene carbonate, cyanoethylene carbonate, or a combination thereof as an additive.

The lithium salt dissolved in the organic solvent is configured to supply lithium ions in a battery, to enable an operation of a rechargeable lithium battery, and to improve transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFOB), and lithium bis(oxalato) borate (LiBOB).

### Separator

Depending on the type of rechargeable lithium battery, a separator may be present between the positive and negative electrodes. The separator may include at least one of polyethylene, polypropylene, polyvinylidene fluoride, or a multilayer film of two or more layers thereof, and a mixed multilayer film such as a polyethylene/polypropylene two-layer separator, a polyethylene/polypropylene/polyethylene three-layer separator, a polypropylene/polyethylene/polypropylene three-layer separator, and the like.

The separator may include a porous substrate and a coating layer including an organic material, an inorganic material, or a combination thereof on one surface, or on both surfaces, of the porous substrate.

The porous substrate may be a polymer film formed of or including any one polymer such as at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed in one coating layer, or a coating layer including an organic material and a coating layer including an inorganic material may be stacked together.

### Rechargeable Lithium Battery

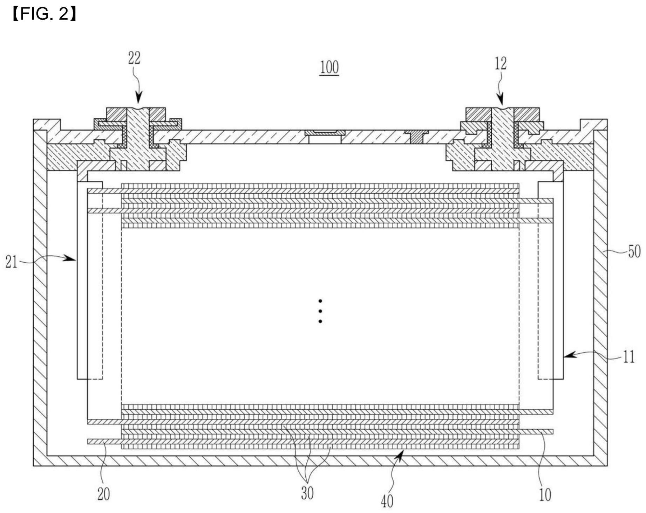

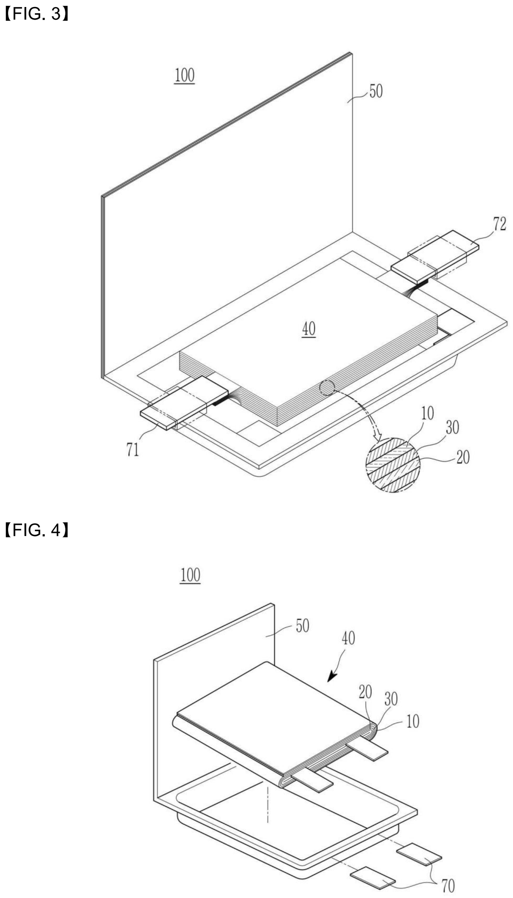

The rechargeable lithium battery may be classified into cylindrical, prismatic, pouch, or coin-type batteries, and the like depending on the shape thereof. FIGS. 1 to 4 are schematic views illustrating the rechargeable lithium battery according to some example embodiments, where FIG. 1 is a cylindrical battery, FIG. 2 is a prismatic battery, and FIGS. 3 and 4 are a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current formed in the electrode assembly 40 to the outside of the battery 100.

The rechargeable lithium battery according to some example embodiments may be applicable to, e.g., automobiles, mobile phones, and/or various types of electrical devices, but the present disclosure is not limited thereto.

Examples and comparative examples of the present disclosure are described below. However, the following examples are only examples of the present disclosure, and the present disclosure is not limited to the following examples.

### Example 1

### (1) Preparation of Positive Electrode Slurry

LiFePO₄ particles having a D10 particle diameter of 0.5 to 0.6 µm, a D50 particle diameter of 1.0 to 1.1 µm, and a D90 particle diameter of 2.3 to 2.4 µm (hereinafter, "first lithium iron phosphate-based compound particles" or "DF-5F") and LiFePO₄ particles having a D10 particle diameter of 2.25 to 2.35 µm, a D50 particle diameter of 7.5 to 7.6 µm, and a D90 particle diameter of 17 to 18 µm (hereinafter, "second lithium iron phosphate-based compound particles" or "T2") were mixed in a weight ratio of 50:50 to prepare a positive electrode active material.

### (2) Manufacturing of Positive Electrode

The positive electrode active material, polyvinylidene fluoride (PVDF) as a binder, and carbon as a conductive agent were mixed in a weight ratio of 95.4:1.6:3.0, a dispersant represented by Chemical Formula 1-1 was added thereto, and the obtained mixture was dispersed in an N-methyl-2-pyrrolidone to prepare a positive electrode slurry. Herein, additive and solid contents of the positive electrode slurry were adjusted to satisfy Table 1.

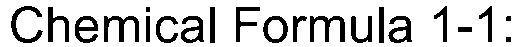

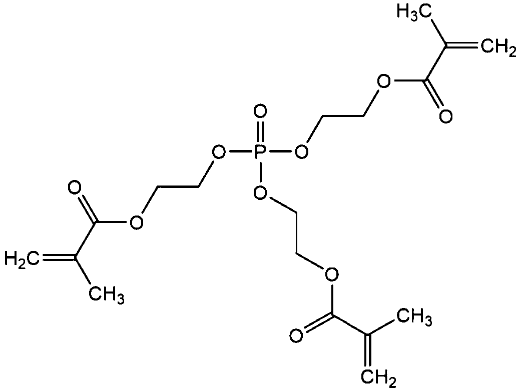

The positive electrode slurry was coated to be 10 µm thick on an aluminum foil (a thickness: 10 µm) to form a positive electrode active material layer.

### (3) Manufacturing of Negative Electrode

A negative electrode active material slurry was prepared by using artificial graphite as a negative electrode active material, mixing the negative electrode active material: a styrene-butadiene rubber binder: carboxylmethyl cellulose in a weight ratio of 97:1:2, and dispersing the mixture in distilled water.

The negative electrode active material slurry was coated on a 10 µm-thick Cu foil and then, dried at 100 °C and pressed to form a negative electrode active material layer.

### (4) Preparation of Electrolyte Solution

An electrolyte solution was prepared by mixing ethylene carbonate (EC):ethylmethyl carbonate (EMC):dimethyl carbonate (DMC) in a volume ratio of 20:40:40 to obtain a carbonate based solvent and dissolving 1.5 M lithium salt (LiPF₆) in the carbonate based solvent.

### (5) Manufacturing of Rechargeable Lithium Battery Cell

The manufactured positive and negative electrodes were assembled to manufacture an electrode assembly, which was housed in a prismatic case, and the electrolyte solution was injected thereinto to manufacture a rechargeable lithium battery cell.

### Examples 2 to 6

A positive electrode and a rechargeable lithium battery cell were manufactured in the same manner as in Example 2, with a difference that the solid content in the positive electrode slurry was changed as shown in Table 1 below.

### Comparative Example 1 (Ref.)

A positive electrode and a rechargeable lithium battery cell were manufactured in the same manner as in Example 2, with a difference that the dispersant represented by Chemical Formula 1-1 was not used in preparing the positive electrode slurry.

### Evaluation Example 1: Particle Size Evaluation of Positive Electrode Slurry

Each of the positive electrode slurries according to the examples and the comparative examples was measured with respect to a particle size (Fineness Of Grind Gauge (FOG)) which indicated a lump size, by using a grind gauge, and the results are shown in Table 1 below.

**Table 1:**

| | Active material | Dispersant | | Positive electrode slurry | |
|---|---|---|---|---|---|
| | | Used or not | Amount* | Solid content | Particle size |
| | | | | (%) | (µm) |
| Comparative Example 1 | [DF-5F] + [T2] | X | 1 | 60.99 | 30 - 35 |
| Example 1 | [DF-5F] + [T2] | O | 1 | 61.02 | 17 |
| Example 2 | [DF-5F] + [T2] | O | 1 | 62.89 | 17 |
| Example 3 | [DF-5F] + [T2] | O | 1 | 65.24 | 17 |
| Example 4 | [DF-5F] + [T2] | O | 1 | 66.51 | 17 |
| Example 5 | [DF-5F] + [T2] | O | 1 | 66.93 | 17 |
| Example 6 | [DF-5F] + [T2] | O | 1 | 69.06 | 17 |

| | | | | | |
|---|---|---|---|---|---|
| * An amount of the dispersant was expressed in parts by weight of the dispersant based on 100 parts by weight of a positive electrode active material. | | | | | |

### Evaluation Example 2: Viscosity and TI Evaluation of Positive Electrode Slurry

Each of the positive electrode slurries according to the examples and the comparative examples was evaluated with respect to viscosity and TI (Thixotropic Index) according to a shear rate at 25 °C by using a HAAKE viscometer (Manufacturer: Thermo Scientific) equipped with 60pi spins, and the results are shown in Table 2 below.

**Table 2:**

| | Viscosity (cP) | | | | | TI | |
|---|---|---|---|---|---|---|---|
| Shear rate (s⁻¹) | 1 | 4 | 10 | 20 | 100 | 10/100 | 1/10 |
| Comparative Example 1 | 8537 | 5144 | 3721 | 2958 | 1162 | 3.20 | 2.29 |
| Example 1 | 2562 | 1805 | 1489 | 1224 | 794 | 1.88 | 1.72 |
| Example 2 | 4822 | 3140 | 2400 | 1878 | 1181 | 2.03 | 2.01 |
| Example 3 | 6829 | 4529 | 3388 | 2614 | 1658 | 2.04 | 2.02 |
| Example 4 | 11450 | 7058 | 5070 | 3924 | 2349 | 2.16 | 2.26 |
| Example 5 | 13110 | 7845 | 5609 | 4269 | 2604 | 2.15 | 2.34 |
| Example 6 | 28580 | 15010 | 10310 | 7739 | 4383 | 2.35 | 2.77 |

### Evaluation Example 3: Drying speed of Positive Electrode Slurry

Each of the positive electrode slurries according to the examples and the comparative examples was measured with respect to a drying speed based on the same heat amount, and the results are shown in Table 3 below.

**Table 3:**

| | Active material | Dispersant | | Positive electrode slurry | |
|---|---|---|---|---|---|
| | | Used or not | Amount (wt%) | Solid content (%) | Drying speed |
| Comparative Example 1 | [DF-5F] + [T2] | X | 1 | 60.99 | 100.00% (reference) |
| Example 1 | [DF-5F] + [T2] | O | 1 | 61.02 | 100.08% |
| Example 2 | [DF-5F] + [T2] | O | 1 | 62.89 | 105.12% |
| Example 3 | [DF-5F] + [T2] | O | 1 | 65.24 | 112.23% |
| Example 4 | [DF-5F] + [T2] | O | 1 | 66.51 | 116.48% |
| Example 5 | [DF-5F] + [T2] | O | 1 | 66.93 | 117.96% |
| Example 6 | [DF-5F] + [T2] | O | 1 | 69.06 | 126.08% |

Referring to Tables 2 and 3 above, the positive electrode slurries for rechargeable lithium batteries according to Examples 1 to 6, compared to the positive electrode slurry of Comparative Example 1, were confirmed to form appropriate or desired viscosity for coating, while increasing a solid content thereof.

Accordingly, the positive electrode slurry according to some example embodiments may improve processability in manufacturing a positive electrode, and provide a positive electrode with improved physical properties.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the spirit and scope of the appended claims.

**Description of Symbols:**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode slurry for a rechargeable lithium battery (100), the positive electrode slurry comprising:
a positive electrode active material comprising lithium iron phosphate-based compound particles;
an organic phosphoric acid dispersant; and
a solvent.

2. The positive electrode slurry as claimed in claim 1, wherein the organic phosphoric acid dispersant comprises a phosphoric acid ester-based dispersant represented by Chemical Formula 1: 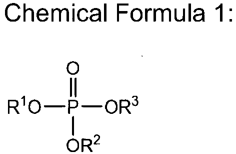 wherein:
R¹ to R³ each independently comprise a hydrogen atom or a substituted or unsubstituted alkyl group having 1 to 30 carbon atoms;
at least one of R¹ to R³ comprises an alkyl group having a terminal end substituted with a (meth)acrylate group.

3. The positive electrode slurry as claimed in claim 1 or 2, wherein the organic phosphoric acid dispersant is included in an amount in a range of ≥ 0.01 parts by weight to ≤ 10 parts by weight based on 100 parts by weight of the lithium iron phosphate-based compound particles.

4. The positive electrode slurry as claimed in any one of claims 1 to 3, wherein the lithium iron phosphate-based compound particles are represented by Chemical Formula 1:
Chemical Formula 1: LiₐFeₓM_{y}PO_{4-b}X_{b}
wherein:
0.9≤a≤1.8, 0.6≤x≤1, 0≤y≤0.4, and 0≤b≤0.1,
M comprises one or more of Al, B, Ba, Ca, Ce, Co, Cr, Cu, Mg, Mn, Mo, Ni, Se, Si, Sn, Sr, Ti, V, W, Y, Zn, and Zr, and
X comprises one or more of F, P, and S.

5. The positive electrode slurry as claimed in any one of claims 1 to 4, wherein the lithium iron phosphate-based compound particles comprise:
first lithium iron phosphate compound particles having a relatively small particle diameter; and
second lithium iron phosphate compound particles having relatively large particle diameter;
wherein preferably:
the first lithium iron phosphate-based compound particles have a D10 particle diameter in a range of ≥ 0.4 µm to ≤ 0.5 µm, a D50 particle diameter in a range of ≥ 0.8 µm to ≤ 1.4 µm, and a D90 particle diameter in a range of ≥ 1.5 µm to ≤ 3 µm, and
the second lithium iron phosphate-based compound particles have a D10 particle diameter in a range of ≥ 1.0 µm to ≤ 2.0 µm, a D50 particle diameter in a range of ≥ 5.0 µm to ≤ 10 µm, and a D90 particle diameter in a range of ≥ 15 µm to ≤ 25 µm.

6. The positive electrode slurry as claimed in any one of claims 1 to 5, wherein the lithium iron phosphate-based compound particles are included in an amount in a range of ≥ 85 parts by weight to ≤ 99 parts by weight based on 100 parts by weight of a total solid content of the positive electrode slurry.

7. The positive electrode slurry as claimed in any one of claims 1 to 6, wherein the positive electrode slurry comprises at least one of a conductive material, a binder, and a combination thereof; wherein preferably the conductive material is included in an amount in a range of ≥ 0.5 parts by weight to ≤ 5 parts by weight based on 100 parts by weight of a total solid content of the positive electrode slurry.

8. The positive electrode slurry as claimed in claim 7, wherein the binder is included in an amount in a range of ≥ 0.5 parts by weight to ≤ 10 parts by weight based on 100 parts by weight of a total solid content of the positive electrode slurry.

9. The positive electrode slurry as claimed in any one of claims 1 to 8, wherein the solvent comprises NMP (N-Methyl-2-Pyrrolidone).

10. The positive electrode slurry as claimed in any one of claims 1 to 9, wherein the solvent is included in an amount in a range of ≥ 30 wt% to ≤ 50 wt% based on 100 wt% of the total amount of the positive electrode slurry.

11. The positive electrode slurry as claimed in any one of claims 1 to 10, wherein a particle size (FOG, Fineness of Grind Gauge) of the positive electrode slurry is in a range of ≥ 5 µm to ≤ 25 µm.

12. A positive electrode (10) for a rechargeable lithium battery (100), the positive electrode (10) comprising:
a positive electrode current collector and a positive electrode active material layer on the positive electrode current collector,
wherein the positive electrode active material layer comprises:
a positive electrode active material comprising lithium iron phosphate-based compound particles; and
an organic phosphoric acid solid component.

13. The positive electrode (10) as claimed in claim 12, wherein the lithium iron phosphate-based compound particles comprise:
first lithium iron phosphate compound particles having a relatively small particle diameter; and
second lithium iron phosphate compound particles having a relatively large particle diameter.

14. The positive electrode (10) as claimed in claim 13, wherein:
the first lithium iron phosphate-based compound particles have a D10 particle diameter in a range of ≥ 0.4 µm to ≤ 0.5 µm, a D50 particle diameter in a range of ≥ 0.8 µm to ≤ 1.4 µm, and a D90 particle diameter in a range of ≥ 1.5 µm to ≤ 3 µm, and
the second lithium iron phosphate-based compound particles have a D10 particle diameter in a range of ≥ 1.0 µm to ≤ 2.0 µm, a D50 particle diameter in a range of ≥ 5.0 µm to ≤ 10 µm, and a D90 particle diameter in a range of ≥ 15 µm to ≤ 25 µm.

15. A rechargeable lithium battery (100), comprising:
the positive electrode (10) as claimed in any one of claims 12 to 14;
a negative electrode (20);
a separator (30) between the positive electrode (10) and the negative electrode (20); and
an electrolyte solution.
